# EUROPEAN PATENT APPLICATION

(11) **EP 2 500 546 A1**
(43) Date of publication of application: **19.09.2012**
(21) Application number: 12159143.2
(22) Date of filing: 13.03.2012
(51) Int. Cl.: F02C 3/22, F02C 7/22

(54) **System and method for controlling a fuel supply associated with a turbomachine**

(30) Priority: 18.03.2011 US 201113051509
(71) Applicant: General Electric Company, Schenectady, NY 12345 (US)
(72) Inventor: Loeven, II Robert Joseph, Greenville, SC South Carolina 29615 (US); Codron, Fabien Thibault, Greenville, SC South Carolina 29615 (US); Mariani, Michael John, Greenville, SC South Carolina 29615 (US); Karaca, Erhan, Schenectady, NY New York 12345 (US)
(74) Representative: Picker, Madeline Margaret

(57) **Abstract**

Embodiments of the present invention incorporate a relatively slow acting valve (170) to throttle the fuel flow through the compressor (100). Embodiments of the present invention seek to reduce the need for recirculating compressed fuel that is not needed by the turbomachine (160). This may increase the net power output and efficiency of a turbomachine - fuel gas compressor system.

## Description

### BACKGROUND

The present disclosure relates generally to fuel supply systems equipped with fuel gas compressors; and more particularly to a system and a method for increasing the overall efficiency of an operatively combined turbomachine and fuel gas compressorhereinafter "Unit".

The turbomachine, which consumes gas fuel (hereinafter "fuel"), generates useful work, such as power. The fuel gas compressor (hereinafter "compressor"), compresses the fuel to a desired range, which is then supplied to the turbomachine. As the operating conditions of the Unit change, the required amount of fuel also changes. This may result in the compressor operating under off-design conditions.

The compressor has a recirculation circuit, or the like, that includes an anti-surge valve. This circuit maintains the operation of the compressor within the design conditions by recirculating additional fuel flow from the compressor discharge to the compressor inlet. This function increases the amount of energy consumed by the compressor without increasing the useful work generated by the turbomachine. Thus, the overall efficiency of the Unit is lowered.

Therefore, a system and method for reducing the need to recirculate additional fuel is proposed. The system and method has the goal of reducing the amount of energy consumed by the compressor when operating under off-design conditions.

### BRIEF DESCRIPTION OF THE INVENTION

An embodiment of the present invention may provide a system for controlling fuel flowing through a fuel supply system to an operatively combined turbomachine and fuel gas compressor unit, the system may include: a compressor comprising at least one stage, a recirculation circuit associated with the at least one stage, wherein the recirculation circuit is equipped with an anti-surge valve; and a flow path that allows a fuel to fluidly communicate through the compressor; and a throttling valve that controls conditions of the fuel at the inlet of the compressor stage within the flow path; wherein the throttling valve reduces a need to recirculate additional fuel through the compressor via the recirculation circuit; wherein the throttling valve assists the compressor with operating within design conditions.

The throttling valve may be located upstream of a first stage of the compressor and in the flow path.

The compressor will typically discharge the fuel to a turbomachine.

The compressor may have at least two stages, and an interstage area that connects each stage, wherein the flow path allows the fuel to fluidly communicate through each stage. Here, the throttling valve may be located within the interstage area and in the flow path.

An alternate embodiment of the present invention provides a method of controlling fuel flowing through a fuel supply system to an operatively combined turbomachine and fuel gas compressor unit, the method may include the steps of: providing a compressor comprising at least one stage, a recirculation circuit associated with the at least one stage, wherein the recirculation circuit is equipped with an anti-surge valve; and a flow path that allows a fuel to fluidly communicate through the compressor; and modulating a throttling valve that controls conditions of the fuel at the inlet of the at least one compressor stage within the flow path; wherein the throttling valve reduces a need to recirculate additional fuel through the compressor via the recirculation circuit; wherein the throttling valve assists the compressor with operating within design conditions.

The method may further provide a turbomachine that receives the fuel from the compressor.

The method may further include the steps of: enabling the throttling valve; controlling the throttling valve to a desired range; and closing the anti-surge valve. Here, the method also comprise the step of determining whether the throttling valve is within the desired range based on a change to an operating condition.

The method may operatively ensure that a throttling valve control loop speed (220) is slower than other protection and pressure control loops.

### BRIEF DESCRIPTION OF THE DRAWINGS

FIG. 1 is a schematic illustrating a compressor in accordance with an embodiment of the present invention.
FIG. 2 is a flowchart illustrating an example of a method for controlling the compressor of FIG. 1, in accordance with an embodiment of the present invention.

### DETAILED DESCRIPTION OF EMBODIMENTS OF THE INVENTION

The present invention has the technical advantage of using a relatively slow acting valve to throttle the fuel flow through the compressor. Embodiments of the present invention reduce the need for recirculating additional fuel, which has been compressed but not currently needed by the turbomachine. This may increase the net power output and overall efficiency of the Unit.

The following detailed description of preferred embodiments refers to the accompanying drawings, which illustrate specific embodiments of the invention. Other embodiments having different structures and operations do not depart from the scope of the present invention.

Certain terminology may be used herein for the convenience of the reader only and is not to be taken as a limitation on the scope of the invention. For example, words such as "upper", "lower", "left", "right", "front", "rear", "top", "bottom", "horizontal", "vertical", "upstream", "downstream", "fore", "aft", and the like; merely describe the configuration shown in the Figures. Indeed, the element or elements of an embodiment of the present invention may be oriented in any direction and the terminology, therefore, should be understood as encompassing such variations unless specified otherwise.

Detailed example embodiments are disclosed herein. However, specific structural and functional details disclosed herein are merely representative for purposes of describing example embodiments. Example embodiments may, however, be embodied in many alternate forms, and should not be construed as limited to only the embodiments set forth herein.

Accordingly, while example embodiments are capable of various modifications and alternative forms, embodiments thereof are illustrated by way of example in the drawings and will herein be described in detail. It should be understood, however, that there is no intent to limit example embodiments to the particular forms disclosed, but to the contrary, example embodiments are to cover all modifications, equivalents, and alternatives falling within the scope of example embodiments.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any, and all, combinations of one or more of the associated listed items.

The terminology used herein is for describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes" and/or "including", when used herein, specify the presence of stated features, integers, steps, operations, elements, and/or components, but do not preclude the presence or addition of one or more other features, integers, steps, operations, elements, components, and/or groups thereof.

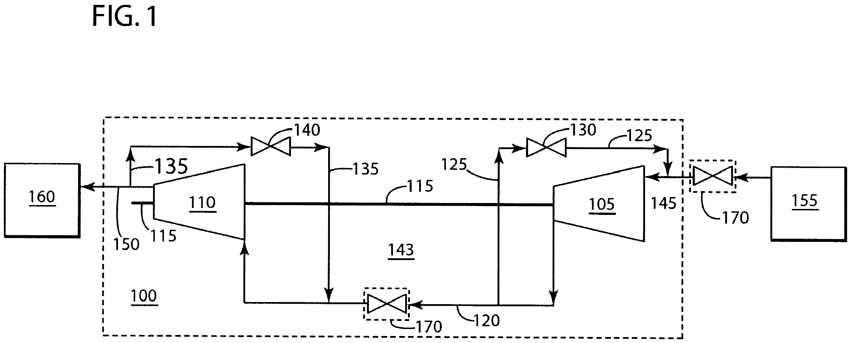

The present invention may be applied to a variety of compressors. This may include, but is not limiting to, those of the axial-flow type, or centrifugal type. Although the following discussion relates to the compressor illustrated in Figure 1, embodiments of the present invention may be applied to a compressor with a different configuration. For example, but not limiting of, the present invention may apply to a compressor having a different a number of stages than illustrated in FIG. 1.

These compressors may be used in a wide variety of applications. This may include fuel delivery to turbomachines that consume gas fuel; such as, but not limiting of: heavy-duty combustion turbines, aero-derivative turbines, etc.

Referring now to figures, where the various numbers represent like elements through the several views, FIG. 1 is a schematic illustrating a compressor 100 in accordance with an embodiment of the present invention. In an embodiment of the present invention, the compressor 100 may receive fuel from a fuel gas supply 155. The fuel is then compressed, exits the compressor 100, and is received by the turbomachine 160.

An embodiment of the compressor 100 may comprise: a first stage 105, a second stage 110; and a shaft 115 upon which the first and second stages 105, 110 rotate. An interstage area 120, allows the fuel to communicate from the first stage 105 to the second stage 110. Recirculation circuits 125, 135 are associated with the first and second stage 105, 110, respectively. Each recirculation circuit 125, 135 includes an anti-surge valve 130, 140 respectively.

A flow path 143 of the fuel communicating through the compressor 100 may be as follows. The inlet 145 of the compressor 100 receives fuel from the fuel gas supply 155. After compression by the first stage 105, the fuel may flow through the interstate area 120 and enter the second stage 110. After compression by the second stage 110, the fuel may exit the compressor 100 via the discharge 150. Next, the fuel may be received by the turbomachine 160.

Embodiments of the present invention incorporate a throttling valve 170, within the flow path 143. The throttling valve 170 serves to regulate the flow of fuel through the flow path 143. This may be accomplished by modulating the valve 170, as the operating conditions on the turbomachine 160 changes. The goal of the valve 170 is to actively reduce the fuel flow through the compressor 100, as required, for a given pressure output.

The operating condition of the turbomachine 160 that may change include, but is not limited to: load; ambient temperature; fuel temperature at the inlet 145 of the compressor 100; the composition of the fuel; or the fuel pressure at the inlet 145 of the compressor 100. For example, but not limiting of, if the load on the turbomachine 160 is decreased, the fuel required may also decrease. Thus, the compressor 100 needs to reduce the output flow, while maintaining a relatively constant pressure. Here, the anti-surge valves 130, 140 may open to recirculate the fuel flow. Then, the throttling valve 170 may begin to close, restricting flow through the flow path 143. As the throttling valve 170 restricts the fuel flow, the anti-surge valves 130, 140 may close to maintain the outlet pressure of the fuel, ending the recirculation process.

An embodiment of the throttling valve 170 may have the form of: a butterfly valve, globe valve, gate valve, or the like. The throttling valve 170 is configured to modulate substantially slower than the anti-surge valves 125, 135 and a control valve (not illustrated), or the like, associated with the turbomachine 160. This may reduce flow/pressure fluctuations that may be experienced by the turbomachine 160.

The present invention provides flexibility on where, in the flow path 143, the throttling valve 170 may be located. In an embodiment of the present invention, the throttling valve 170 may be located upstream of the first stage 170. In an alternate embodiment of the present invention, the throttling valve 170 may be located within the interstage area 120.

As will be appreciated, the present invention may be embodied as a method, system, or computer program product. Accordingly, the present invention may take the form of an entirely hardware embodiment, an entirely software embodiment (including firmware, resident software, micro-code, etc.) or an embodiment combining software and hardware aspects all generally referred to herein as a "circuit", "module," or "system". Furthermore, the present invention may take the form of a computer program product on a computer-usable storage medium having computer-usable program code embodied in the medium.

Any suitable computer readable medium may be utilized. The computer-usable or computer-readable medium may be, for example but not limiting of, an electronic, magnetic, optical, electromagnetic, infrared, or semiconductor system, apparatus, device, or propagation medium. More specific examples (a non exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device.

Computer program code for carrying out operations of the present invention may be written in an object oriented programming language such as Java7, Smalltalk or C++, or the like. However, the computer program code for carrying out operations of the present invention may also be written in conventional procedural programming languages, such as the "C" programming language, or a similar language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

The present invention is described below with reference to flowchart illustrations and/or block diagrams of methods, apparatuses (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a public purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks. The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block.

The present invention may include a control system, or the like, that has the technical effect of controlling the throttling valve 170. The present invention may be configured to automatically determine the reference strokes for the throttling valve 170. Alternatively, the control system may be configured to require a user action to initiate operation. An embodiment of the control system may function as a stand-alone system. Alternatively, the control system may be integrated as a module, or the like, within a broader system, such as, but is not limiting of, a turbomachine control system.

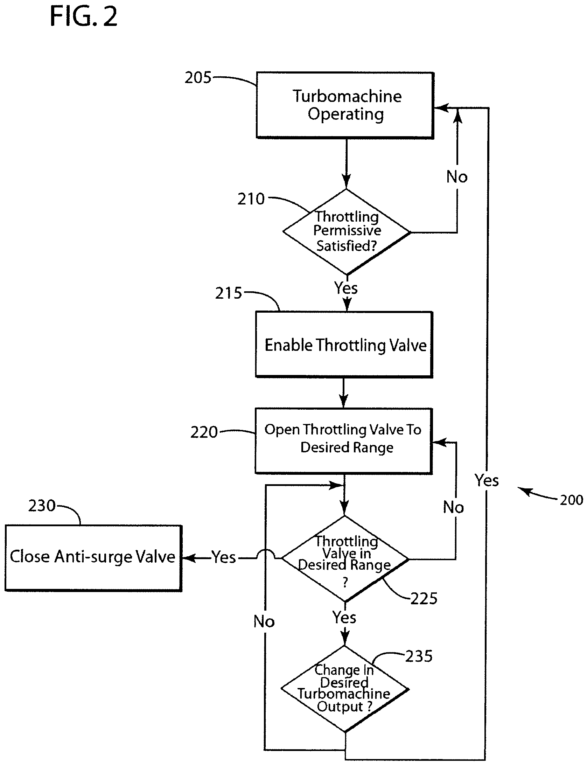

Referring now to FIG. 2 which is a flowchart illustrating an example of a method 200 for controlling the compressor 100 integrated with a throttling valve 170 of FIG. 1, in accordance with an embodiment of the present invention.

In step 205, the method 200 may confirm that the turbomachine is in the correct mode. Here, the turbomachine is normally operating in a manner ready to produce useful work.

In step 210, the method 200 may determine if a throttling valve permissive is satisfied. The permissive may be considered an operating condition of the turbomachine; such as but not limiting of the turbomachine operating on a gas fuel and exporting power. If the throttling permissive is satisfied, then the method 200 may proceed to step 215; otherwise the method 200 may revert to step 205.

In step 215, the method 200 may enable operation of the throttling valve. Here, the graphical user interface associated with the control system may indicate that operation of the throttling valve is enabled. In an embodiment of the present invention, the throttling valve may be disabled, and fully opened, when the turbomachine is not operating on gas fuel.

In step 220, the method 200 may open the throttling valve to a desired range. The desired range may coincide with a desired discharge pressure of the fuel. Embodiments of the present invention may provide flexibility in selecting the desired range. For example, but not limiting of, the desired range may be a gage pressure range of from 19 bars to about 22 bars. Alternatively, the desired range may be a value below the set-point for operation of the anti-surge valve. For example, but not limiting of, the desired range may be a range of from about 0.25 bar to about 2 bars below the set-point of the anti-surge valve.

As discussed, the throttling valve may operate while the permissives are met and maintained. If the aforementioned operating conditions change, then the throttling valve may adjust accordingly. In an embodiment of the present invention the operating range of the throttling valve may be limited to reduce the potential of downstream flow fluctuations. In an embodiment of the present invention, the range of the throttling valve may be dependent on the linear controllable range of the specific valve used.

Another feature of the throttling valve control is a relatively slow loop speed to reduce the potential for instability throughout the flow path. In an embodiment of the present invention, the control loop speed of throttling valve may be slower than other protection and pressure control loops in the fuel flow path; such as, but not limiting of the anti-surge valve control. In an alternate embodiment of the present invention, the movement of the throttling valve may be biased to ensure that the movement of the throttling valve is substantially slower than the movement of the anti-surge valve.

In step 225, the method 200 may determine whether the position of the throttling valve is in the desired range. If the throttling valve is within the desired range, then the method 200 may proceed to steps 230 and 235; otherwise, the method 200 may revert to step 220.

In step 230, the method 200 may confirm that the throttling valve is within the desired range. This may ensure that the compressor operating conditions are within the design range without the need of recirculation through the anti-surge circuit.

In step 235, the method 200 may determine whether the aforementioned conditions of the Unit have changed. Here, the control system may receive information regarding the aforementioned operating conditions from the turbomachine control system or the like. For example, but not limiting of, if the turbomachine load had changed, then the method 200 may revert to step 205; otherwise the method 200 may revert to step 225 for operational monitoring.

The flowcharts and step diagrams in the figures illustrate the architecture, functionality, and operation of possible implementations of systems, methods and computer program products according to various embodiments of the present invention. In this regard, each step in the flowchart or step diagrams may represent a module, segment, or portion of code, which comprises one or more executable instructions for implementing the specified logical function(s). It should also be noted that, in some alternative implementations, the functions noted in the step might occur out of the order noted in the figures. For example, two steps shown in succession may, in fact, be executed substantially concurrently, or the steps may sometimes be executed in the reverse order, depending upon the functionality involved. It will also be noted that each step of the block diagrams and/or flowchart illustration, and combinations of steps in the block diagrams and/or flowchart illustration, can be implemented by special purpose hardware-based systems which perform the specified functions or acts, or combinations of special purpose hardware and computer instructions.

Although specific embodiments have been illustrated and described herein, those of ordinary skill in the art appreciate that any arrangement, which is calculated to achieve the same purpose, may be substituted for the specific embodiments shown and that the invention has other applications in other environments. This application is intended to cover any adaptations or variations of the present invention. The following claims are in no way intended to limit the scope of the invention to the specific embodiments described herein.

As one of ordinary skill in the art will appreciate, the many varying features and configurations described above in relation to the several embodiments may be further selectively applied to form other possible embodiments of the present invention. Those in the art will further understand that all possible iterations of the present invention are not provided or discussed in detail, even though all combinations and possible embodiments embraced by the several claims below or otherwise are intended to be part of the instant application. In addition, from the above description of several embodiments of the invention, those skilled in the art will perceive improvements, changes, and modifications. Such improvements, changes, and modifications within the skill of the art are also intended to be covered by the appended claims. Further, it should be apparent that the foregoing relates only to the described embodiments of the present application and that numerous changes and modifications may be made herein without departing from the scope of the present disclosure as defined by the following claims and the equivalents thereof.

## Claims

1. A system for controlling fuel flowing through a fuel supply system (155) to an operatively combined turbomachine (160) and fuel gas compressor unit (100), the system comprising:
a compressor comprising (100) at least one stage, a recirculation circuit (125,135) associated with the at least one stage, wherein the recirculation circuit (125,135) is equipped with an anti-surge valve (130,140); and a flow path (143) that allows a fuel to fluidly communicate through the compressor (100); and
a throttling valve (170) that controls conditions of the fuel at the inlet (145) of the compressor stage within the flow path (143); wherein the throttling valve (170) reduces a need to recirculate additional fuel through the compressor (100) via the recirculation circuit (125,135); wherein the throttling valve (170) assists the compressor (100) with operating within design conditions.

2. The system of claim 1, wherein the throttling valve (170) is located upstream of a first stage (105) of the compressor (100) and in the flow path (143).

3. The system of claim 1, wherein the compressor (100) discharges the fuel to a turbomachine (160).

4. The system of claim 1, wherein the compressor (100) comprises at least two stages (105,110), and an interstage area (120) that connects each stage, wherein the flow path (143) allows the fuel to fluidly communicate through each stage (105,110).

5. The system of claim 7, wherein the throttling valve (170) is located within the interstage area (120) and in the flow path (143).

6. A method of controlling fuel flowing through a fuel supply system (155) to an operatively combined turbomachine (160) and fuel gas compressor unit (100), the method comprising:
providing a compressor (10) comprising at least one stage, a recirculation circuit (125,135) associated with the at least one stage, wherein the recirculation circuit (125,135) is equipped with an anti-surge valve (130,140); and a flow path (143) that allows a fuel to fluidly communicate through the compressor (100); and
modulating a throttling valve (170) that controls conditions of the fuel at the inlet (145) of the at least one compressor stage within the flow path (143);
wherein the throttling valve (170) reduces a need to recirculate additional fuel through the compressor(100) via the recirculation circuit (125,135); wherein the throttling valve (170) assists the compressor (100) with operating within design conditions.

7. The method of claim 6 further comprising providing a turbomachine (160) that receives the fuel from the compressor (100).

8. The method of claim 6 further comprising the steps of:
a. enabling the throttling valve (215);
b. controlling the throttling valve to a desired range (220,225,235); and
c. closing the anti-surge valve (230).

9. The method of claim 8 further comprising the step of determining whether the throttling valve is within the desired range based on a change to an operating condition (225).

10. The method of claim 9, wherein the operating condition comprise at least one of:
load;
ambient temperature;
fuel temperature at an inlet of the compressor;
the composition of the fuel; and
the fuel pressure at the inlet of the compressor 100.

11. The method of claim 8, wherein the desired range is within the linear controllable range of the throttling valve (170), and/or the desired range is from about 0.25 bar to about 2.0 bar lower than a pressure set point of the anti-surge valve.

12. The method of claim 8, further comprising determining whether a permissive is satisfied, wherein the permissive preferably comprises at least one of:
a. the turbomachine is operating on a gas fuel; and
b. the turbomachine is producing useful work.

13. The method of claim 8, further comprising tuning a movement of the throttling valve (170) to allow the anti-surge valve to move substantially faster than the throttling valve (170).

14. The method of claim 6, wherein the compressor (10) comprises at least two stages and an interstage area that connects each stage, wherein the flow path allows the fuel to fluidly communicate through each stage.

15. The method of claim 8, wherein a throttling valve control loop speed (220) is slower than other protection and pressure control loops.
